# EUROPÄISCHE PATENTSCHRIFT

(11) **EP 1 003 619 B1**
(45) Veröffentlichungstag und Bekanntmachung des Hinweises auf die Patenterteilung: **06.03.2002**
(21) Anmeldenummer: 98945139.8
(22) Anmeldetag: 03.08.1998
(51) Int. Cl.: B21K 1/30, B21J 9/02

(54) **VERFAHREN ZUM HERSTELLEN EINES SCHALTZAHNRADES, VORRICHTUNG ZUR DURCHFÜHRUNG DES VERFAHRENS UND NACH DEM VERFAHREN HERGESTELLTES SCHALTZAHNRAD**
METHOD FOR PRODUCING A GEAR WHEEL, DEVICE FOR CARRYING OUT THE METHOD, AND WHEEL PRODUCED BY THIS METHOD
PROCEDE POUR LA FABRICATION D'UN PIGNON DE CHANGEMENT DE VITESSES, DISPOSITIF POUR LA MISE EN OEUVRE DE CE PROCEDE ET PIGNON DE CHANGEMENT DE VITESSES REALISE SELON CE PROCEDE

(30) Priorität: 13.08.1997 DE 19735109; 09.10.1997 DE 19744639
(43) Veröffentlichungstag der Anmeldung: 31.05.2000
(73) Patentinhaber: HIRSCHVOGEL UMFORMTECHNIK GmbH GESENKSCHMIEDE UND PRESSWERK, D-86920 Denklingen (DE); Heinrich Schmid Maschinen und Werkzeugbau AG, 8645 Jona (CH)
(72) Erfinder: HIRSCHVOGEL, Manfred, D-86925 Fuchstal-Leeder (DE); KETTNER, Peter, D-86920 Denklingen (DE); NÄGELE, Hubert, D-86925 Fuchstal-Au (DE); MÜLLER, Oskar, CH-8832 Wollerau (CH); GIGER, Albin, CH-8645 Jona (CH); HONEGGER, Hans-Ruedi, CH-8735 St. Gallenkappel (CH)
(74) Vertreter: Rupp, Christian, Dipl.Phys.
(86) Internationale Anmeldenummer: EP9804831
(87) Internationale Veröffentlichungsnummer: WO9908820

(56) Entgegenhaltungen:
- DE-A- 3 427 156
- US-A- 5 263 238
- PATENT ABSTRACTS OF JAPAN vol. 014, no. 177 (M-0960), 9. April 1990 & JP 02 030350 A (MAZDA MOTOR CORP), 31. Januar 1990
- "FORGING AHEAD" ENGINEERING. (INCL. MACHINE SHOP MAGAZINE), Bd. 231, Nr. 11, 1. Dezember 1991, Seite 46 XP000277337
- JON LARSEN: "ORBITAL COLD FORGING APPLIED TO THE MANUFACTURE OF COMPLEX AUTO.TRANSMISSION COMPONENTS" CONF. PROC. 9.INTERNATIONAL COLD FORGING CONGRESS, 22. - 26. Mai 1995, Seiten 411-415, XP002059370 REDHILL,GB

## Beschreibung

Die Erfindung betrifft ein Verfahren zum Herstellen eines Schaltzahnrades mit koaxial angeordneten und axial vorstehenden Schaltzähnen, die einen axialen Hinterschnitt haben.

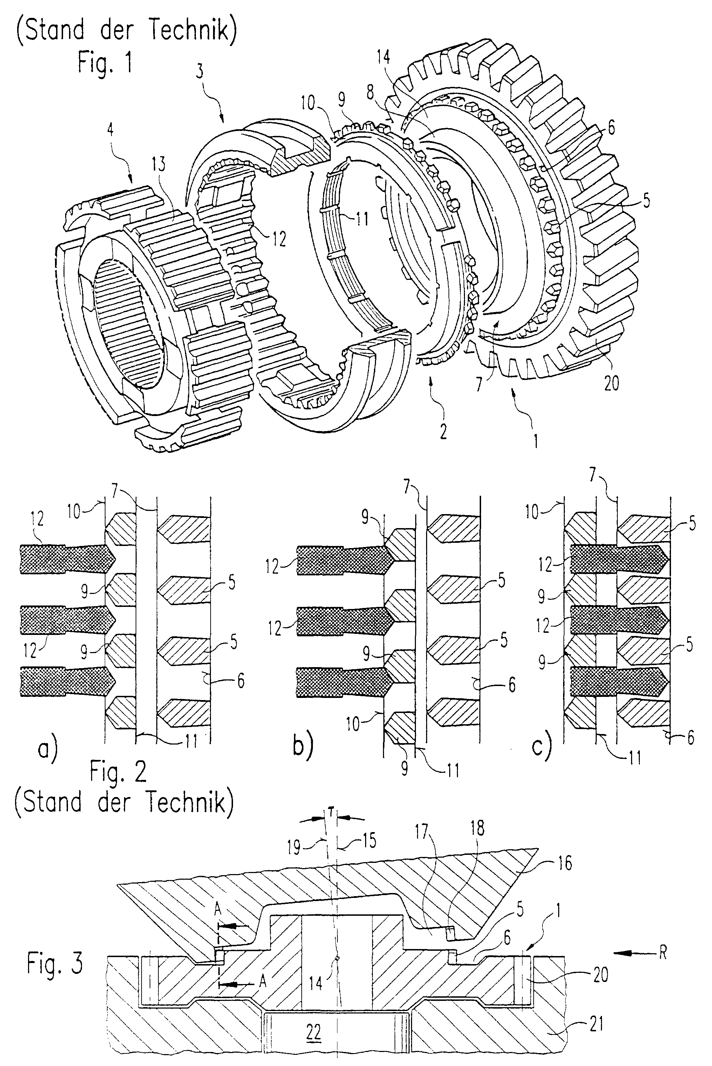

Schaltzahnräder der vorstehend angegebenen Art finden beispielsweise Anwendung in Synchrongetrieben für Automobile. Ein Ausschnitt einer zum Stand der Technik gehörenden Synchronisier-Einheit wird zum allgemeinen Verständnis zunächst anhand der Figuren 1 und 2a-c erläutert.

Figur 1 zeigt in Explosionsdarstellung ein Losrad 1 mit Kupplungskörper 7, einen Synchronring 2, eine Schiebemuffe 3 und einen Synchronkörper 4.

Das Losrad 1 ist mit einer Außenzahnung 20 versehen. An seiner Stirnseite ist einstückig ein Kupplungskörper 7 angeformt. Der Kupplungskörper 7 weist einen koaxialen Ring von Schaltzähnen 5 auf, die sich - ausgehend von einer einen Hinterschnitt bildenden koaxialen Nut 6 - in axialer Richtung nach links erstrecken und über die Stirnseite des Losrades 1 vorstehen. Die Schaltzähne 5 haben einen axialen Hinterschnitt, derart, daß sich die Breite dieser Schaltzähne 5 - vom Zahnkopf ausgehend - in Richtung auf den Grund der Nut 6 verringert. Die Schaltzähne 5 weisen an ihrem Kopfende eine Dachschräge auf, die an einer sich quer zur Achse erstreckenden Ringfläche 14 endet. Von dieser Ringfläche 14 ausgehend erhebt sich ein koaxialer Reibkegel 8.

Der Synchronisierring 2 ist an seiner Außenseite mit einem Ring von Schaltzähnen 9 versehen, welche sich in axialer Richtung zwischen zwei quer zur Achse verlaufenden Ringflächen 10 und 11 erstrecken. Die Innenfläche des Synchronringes 2 paßt zu dem Reibkegel 8 am Kupplungskörper 7.

Die Schiebemuffe 3 ist mit sich in axialer Richtung erstreckenden Schaltzähnen 12 versehen und auf dem Synchronkörper 4 axial verschiebbar, jedoch nicht verdrehbar angeordnet. Der Synchronkörper 4 weist dazu seinerseits axial verlaufende Zähne 13 auf, die mit den innenliegenden Schaltzähnen 12 der Schiebemuffe 3 kämmen. Die Schaltzähne 12 der Schiebemuffe haben nächst ihren beiden axialen Enden ebenfalls einen Hinterschnitt.

Die Figur 2 zeigt die Stellungen der Schaltzähne der in Figur 1 gezeigten Getriebeelemente in drei verschiedenen Schaltstellungen, und zwar als Abwicklungs-Schnitt.

Figur 2a zeigt die Leerlaufstellung der Synchronisierschaltung. Hier ist die Schiebemuffe 3 in Mittelstellung. Das Losrad 1 ist mit seinem Kupplungskörper sowie einem weiteren (nicht gezeigten Losrad) gegenüber dem Synchronkörper frei drehbar. Die Schaltzähne 12 der Schiebemuffe 3, die Schaltzähne 9 des Synchronringes 2 und die Schaltzähne des Kupplungskörpers haben zueinander einen Abstand.

Figur 2b zeigt die Getriebeelemente in Sperrstellung. Die Schiebemuffe 3 und der Synchronring 2 sind nach rechts verschoben worden. Der Synchronring 2 tritt dadurch mit dem Reibkegel 8 des Kupplungskörpers 7 in Reibschluß und wird verdreht, so daß die Schaltzähne 12 der Schiebemuffe und die Schaltzähne 9 des Synchronringes 2 mit ihren Dachschrägen aneinanderliegen.

Figur 2c zeigt die Stellung "Gang geschaltet". Hier ist die Schiebemuffe soweit nach rechts geschoben, daß die Schaltzähne 12 der Schiebemuffe 3 die Schaltzähne 9 des Synchronringes 2 vollständig durchgreifen und darüber hinaus in die Schaltzähne 5 des Kupplungskörpers 7 hineinragen. Es ist erkennbar, daß sich die Hinterschneidungen der Schaltzähne 12 der Schiebemuffe 3 bei Übertragung eines Drehmomentes und die Hinterschneidungen der Schaltzähne 5 des Kupplungskörpers 7 gegenseitig hintergreifen, so daß eine axiale Trennung der Getriebeelemente verhindert wird. Dies ist der Sinn der Hinterschneidungen.

Es sind bereits mehrere Verfahren zum Herstellung von Schaltzahnrädern mit hinterschnittenen Schaltzähnen bekannt.

So wird in der vorveröffentlichten DE 20 40 413 A ein bekanntes Verfahren beschrieben, mit dem Keilzahnräder mit hinterschnittenen Zähnen hergestellt werden können, indem zunächst Zähne mit parallel verlaufenden Zahnflanken durch Vorpressen hergestellt und anschließend unter Ausbildung einer Dachform fertiggestaucht werden.

Weiterhin ist ein Verfahren zum Herstellen eines mit einer Kurzverzahnung versehenen Synchronbauteiles mit hinterschnittenen Zähnen für Schaltgetriebe bekannt (DE 34 27 156 C2), bei dem durch Vorschmieden zunächst ein Halbzeug hergestellt wird, dessen Kurzverzahnung Zähne mit einem den fertigen Zahnkopf überhöhenden Aufmaß aufweist. Danach wird durch mehrere Kalibrierschläge das kalte Halbzeug derart bearbeitet, daß zunächst die Zahnköpfe vorgestaucht werden, wobei die Zähne an ihren radial äußeren Seiten gesenkseitig abgestützt werden. Gleichzeitig wird mit dem Vorstauchen oder durch einen weiteren Kalibrierschlag eine Kaltverfestigung jeweils im Zahnbereich der Zähne erzeugt. Danach werden die Zahnköpfe fertiggestaucht, so daß sie eine Dachform haben und die Zahnflanken die ihrer Hinterschneidung entsprechende Schrägstellung.

Schließlich ist noch ein Verfahren zum maschinellen Bearbeiten von Kupplungszahnrädern für Getriebe von Kraftfahrzeugen bekannt (DE 34 38 454 A1), bei dem in einem ersten Arbeitsschritt eine Rohform einer Rundstange aus einem unter Druck verformbaren Material durch Kaltschmieden oder Warmschmieden ausgebildet wird. In einem zweiten Arbeitsgang wird die Rohform durch ein Gesenk gedrückt. Auf diese Weise erhält man den Querschnitt mit den festgelegten Endabmessungen und gleichzeitig einen Fasenvorsprung. In einem dritten Arbeitsgang wird der Fasenvorsprung in eine Zahnform gebracht. In einem vierten Arbeitsschritt wird die Zahnform in das Gesenk von einer Stirnfläche der gegenüberliegenden Seite des Fasenvorsprungs gepreßt, so daß die Zahnform einen Hinterschnitt erhält.

Der Erfindung liegt die Aufgabe zugrunde, ein spanlos arbeitendes Verfahren zum Herstellen eines Schaltzahnrades mit in axialer Richtung hinterschnittenen Schaltzähnen anzugeben, welches sich besonders einfach ausführen läßt und zur Massenproduktion eignet.

Das erfindungsgemäße Verfahren ist durch die im Anspruch 1 angegebenen Verfahrensschritte gekennzeichnet.

Das erfindungsgemäße Verfahren zeichnet sich besonders dadurch aus, daß es ohne Unterbrechung der einzelnen Zähne durchgehend kontinuierlich ausgeführt werden kann und zu reproduzierbaren Erzeugnissen führt. Das Verfahren ist einfach und zeit- sowie kostensparend.

Vorteilhafte Ausgestaltungen des erfindungsgemäßen Verfahrens sind Gegenstand der Unteransprüche 2-9.

Die Erfindung betrifft ferner eine Vorrichtung, mit der das vorstehend beschriebene Verfahren durchgeführt werden kann. Die wesentlichen Merkmale dieser Vorrichtung sind Gegenstand des Anspruches 10.

Anspruch 11 betrifft eine vorteilhafte Ausgestaltung der erfindungsgemäßen Vorrichtung.

Schließlich ist Gegenstand der Erfindung noch ein Schaltzahnrad, welches nach dem vorstehend beschriebenen Verfahren herstellt worden ist. Die kennzeichnenden Merkmale dieses Schaltzahnrades sind im Anspruch 12 aufgeführt.

Die Erfindung wird nachfolgend anhand der Zeichnungen beispielhaft erläutert. Es zeigen:
- Fig. 1: den Stand der Technik in Form einer perspektivischen Explosionsdarstellung von Teilen einer Synchronisiereinheit für ein Automobil, wobei eines dieser Teile ein Schaltzahnrad mit einen Hinterschnitt aufweisenden Schaltzähnen ist:
- Fig. 2a-c: Abwicklungsschnitte der Schaltzähne von Elementen der in Figur 1 gezeigten Getriebeeinheit in drei verschiedenen Schaltstellungen;
- Fig. 3: einen Schnitt durch eine schematisch dargestellte Vorrichtung zur Herstellung eines Schaltzahnrades nach dem erfindungsgemäßen Verfahren;
- Fig. 4-9: jeweils einen Schnitt A-A durch einen Schaltzahn des mit der Vorrichtung in Figur 3 hergestellten Schaltzahnrades in aufeinanderfolgenden Herstellungsstufen der Bearbeitungssequenz;
- Fig. 10: eine Ansicht wie Figur 9, wobei die Zahnausnehmung des Verformwerkzeuges ihrerseits einen Hinterschnitt aufweist; und
- Fig. 11: einen Teilschnitt durch ein Schaltzahnrad mit Schaltzahn, der insbesondere die Ringnut und das Abmessungsverhältnis in Bezug auf die Schaltzähne erkennen läßt.

Figur 3 zeigt ein Aufnahmeteil in Form eines Untergesenks 21 zur Aufnahme einer Schaltzahnrad-Vorform bzw. des nach Durchführung des Verfahrens fertiggestellten Schaltzahnrades 1. Für das Schaltzahnrad 1 in den Figuren 3 bis 11 sind die gleichen Bezugszeichen verwendet worden wie für das Losrad 1 mit Kupplungskörper 7 in Figur 1. Die Achse des Schaltzahnrades 1 ist mit 15 bezeichnet und wird nachfolgend als "Drehachse" bezeichnet.

Über dem Untergesenk 21 ist ein Verformwerkzeug 16 angeordnet, welches an seiner Unterseite eine kreisförmige Einsenkung 17 aufweist, an deren Rand sich Zahnausnehmungen 18 befinden, die sowohl axial zur Stirnseite des Verformwerkzeuges 16 hin wie auch radial nach innen hin offen sind. Das Verformwerkzeug kann durch einen (nicht dargestellten) Antrieb gegenüber dem Untergesenk 21 in eine taumelnde Kreisbewegung versetzt werden, wobei der Taumelwinkel τ einstellbar ist. Die Taumelachse ist mit 19 bezeichnet. Wenn der Taumelwinkel τ größer als 0° ist, schneiden sich die Drehachse 15 und die Taumelachse 19 im Schnittpunkt 14. Bei der Ausführung der taumelnden Kreisbewegung dreht sich die Taumelachse 19 um die Drehachse 15. Dadurch ist das Verformwerkzeug 16 jeweils an einer Stellung in intensivem Verformungskontakt mit den betreffenden Schaltzähnen 5 des Schaltzahnrades 1. während an der axial gegenüberliegenden Stelle eine - vom Taumelwinkel τ abhängige - teilweise oder vollständige Trennung zwischen dem Verformwerkzeug 16 und den entsprechenden Schaltzähnen 5 des Schaltzahnrades 1 auftritt.

Das fertige Schaltzahnrad 1 kann nach Abschluß des Verfahrens und nach Entfernen des Verformwerkzeuges 16 mittels eines Ausstoßers 22 aus dem Untergesenk 21 herausgestoßen werden.

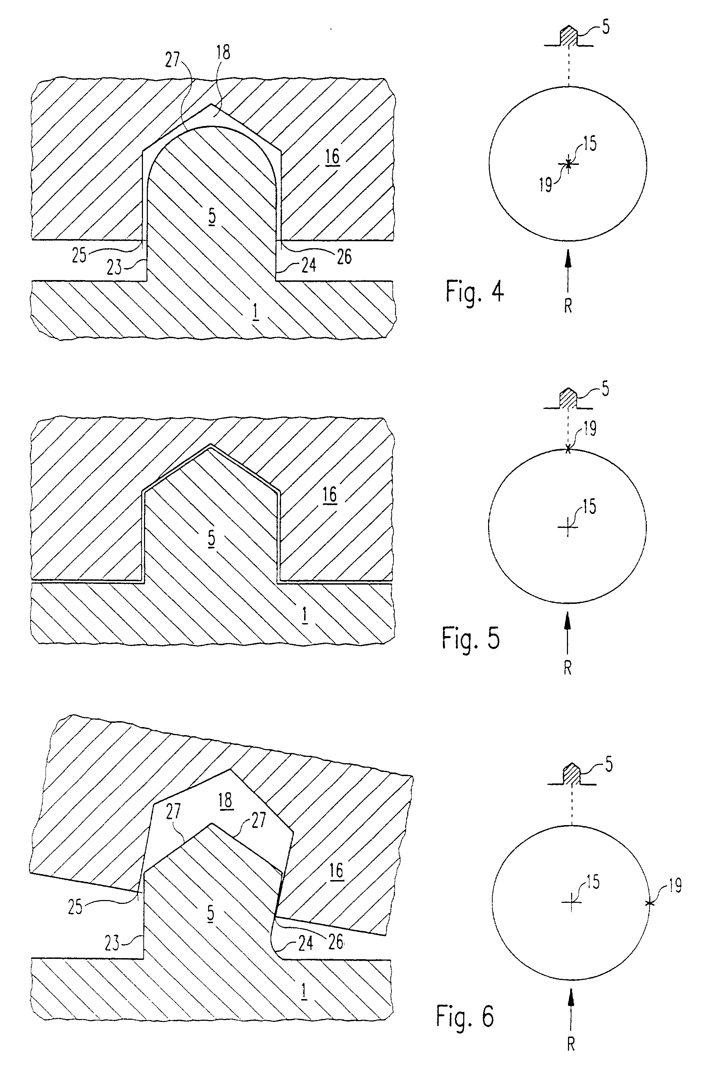

Die Figuren 4-9 zeigen links einen Schnitt A-A durch einen Schaltzahn 5 des Schaltzahnrades 1 in Figur 3 aus der Blickrichtung, die in Figur 3 durch den Pfeil R angedeutet ist. Das bedeutet, daß jeweils der hintere Schaltzahn 5 betrachtet wird. Rechts daneben ist in den Figuren 4-10 jeweils ein Kreis gezeichnet, welcher die Position x der Taumelachse 19 oberhalb des Schnittpunktes zwischen der Taumelachse 19 und der Achse 15 des Schaltzahnrades 1 erkennen läßt. Aus der Position x der Taumelachse 19 kann auf den Taumelwinkel τ geschlossen werden.

Figur 4 zeigt den Zustand, daß das Gesenk geschlossen ist. Das bedeutet, daß das Verformwerkzeug 16 bei dem Taumelwinkel τ = 0° auf das zunächst als Vorform vorliegende Schaltzahnrad 1 aufgesetzt ist. Die Schaltzahnrad-Vorform 1 ist mit vorgeformten Schaltzähnen 5 versehen. Diese haben parallele Flanken 23 und 24. An ihrem axialen Ende sind sie mit einer Abrundung 27 versehen. Statt dessen können die vorgeformten Schaltzähne 5 aber auch bereits Dachform haben. Das Verformwerkzeug 16 ist mit entsprechenden Zahnausnehmungen 18 versehen, die ihrerseits einen keilförmigen Grund haben, um an die vorgeformten Schaltzähne 5 - sofern nicht bereits vorhanden - eine Dachform anzuformen. Die Randkanten 25 und 26 der Zahnausnehmungen 18 dienen - wie nachfolgend noch beschrieben wird - zum Ausformen der Hinterschneidungen. Wie der neben der Schnittdarstellung befindliche Kreis erkennen läßt. verlaufen die Drehachse 15 und die Taumelachse 19 hier ohne Abstand koaxial (τ = 0°).

Anhand der Figuren 5 - 9 wird nachfolgend beispielhaft eine Bearbeitungssequenz des Verfahrens zum Herstellen eines Schaltzahnrades beschrieben.

Figur 5 zeigt eine erste Herstellungsstufe der Bearbeitungssequenz, bei der ein maximaler Taumelwinkel τ eingestellt ist. Dies ergibt sich aus der Position x der Taumelachse 19 auf dem neben der Schnittdarstellung befindlichen Kreis. Die Taumelachse 19 befindet sich hier oberhalb der Achse 15. Das bedeutet, daß noch keine Kreisbewegung des Verformwerkzeuges 16 um die Drehachse 15 stattgefunden hat. In dieser ersten Herstellungsstufe wird an dem vorgeformten Schaltzahn 5 eine leichte Dachform angeformt; außerdem wird der Schaltzahn 5 geringfügig verbreitert.

Figur 6 zeigt die nächste Stufe der Bearbeitungssequenz, bei der wiederum der maximale Taumelwinkel τ eingestellt ist. Die Taumelachse 19 befindet sich hier rechts von der Achse 15. Das bedeutet, daß die Taumelachse 19 und mit dieser das Verformwerkzeug 16 gegenüber Figur 5 eine Kreisbewegung um 90° vollführt haben. Man erkennt in der Schnittdarstellung, daß die Randkante 26 der Zahnausnehmung 18 an dem vorgeformten Schaltzahn 5 einen Hinterschnitt anformt. Die Zahnflanke 24 ist nun nicht mehr gerade, sondern konkav.

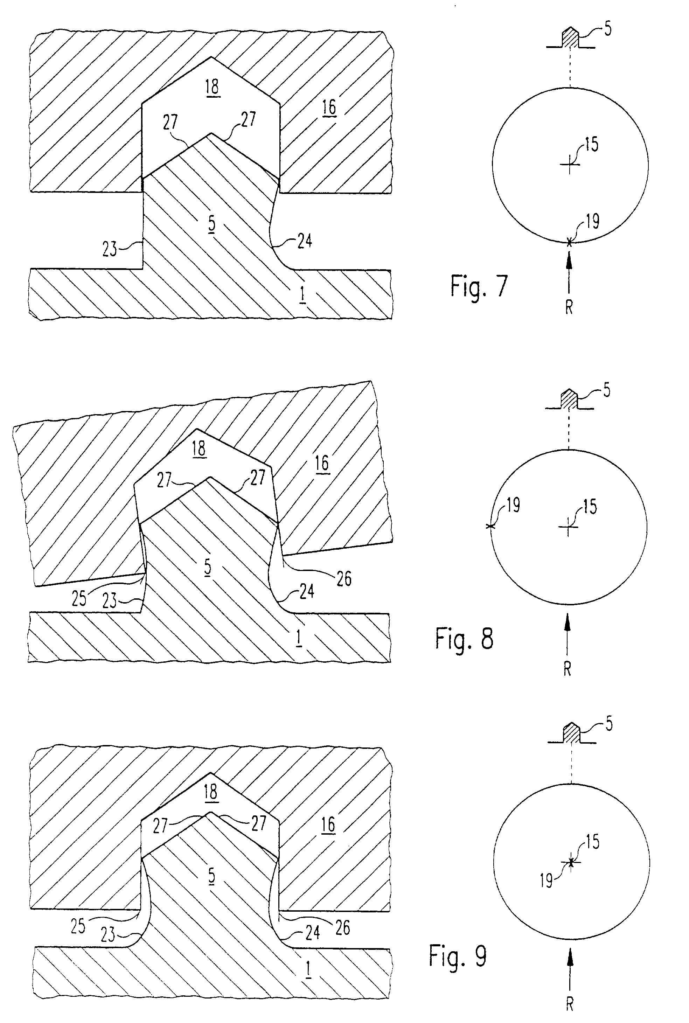

Figur 7 zeigt die Taumelachse 19, nachdem sie eine 180°-Kreisbewegung gegenüber Figur 5 um die Drehachse 15 vollführt hat. Das Verformwerkzeug 16 hat sich an der Stelle des hier betrachteten Schaltzahnes 5 gegenüber der Schaltzahnrad-Vorform 1 angehoben, ohne daß eine Trennung von Schaltzahn 5 und Zahnausnehmung 18 erfolgt ist.

In Figur 8 hat die Taumelachse 19 eine Kreisbewegung von 270° vollführt. Hier senkt sich das Verformwerkzeug 16 wieder in Richtung auf den teilweise noch vorgeformten Schaltzahn 5 ab und formt an dessen linker Flanke 23 einen konkaven Hinterschnitt an. Auch die Zahnflanke 23 ist dadurch nicht mehr gerade, sondern nunmehr ebenfalls konkav.

Figur 9 zeigt den fertiggestellten Schaltzahn mit Hinterschnitt, wobei der Taumelwinkel τ wiederum auf 0° zurückgestellt ist. Die Drehachse 15 und die Taumelachse 19 verlaufen wieder parallel zueinander und ohne Abstand.

Bei der praktischen Durchführung des Verfahrens wird der Taumelwinkel während mehrerer Taumelsequenzen sukzessive von 0° auf den maximalen Endwinkel erhöht. Danach werden mehrere Taumelsequenzen unter Beibehaltung des Endwinkels durchgeführt. Schließlich wird der Taumelwinkel unter Durchführung mehrerer weiterer Taumelsequenzen wieder sukzessive auf 0° reduziert.

Um eine möglichst symmetrische Anformung des Hinterschnitts an den Schaltzähnen 5 zu gewährleisten, kann in der Praxis der gleiche Vorgang nochmals wiederholt werden, wobei die Kreisbewegung in umgekehrter Richtung erfolgt.

Der maximale Taumelwinkel hängt von den eingesetzten Taumelmaschinen ab. Mit diesen ist nach heutigem Stand ein maximaler Taumelwinkel von 2° einstellbar. Bei dem hier betrachteten Verfahren entspricht der angestrebte Hinterschnitt-Winkel an den Schaltzähnen dem maximalen Taumelwinkel, mit dem die Vorrichtung zur Durchführung des Verfahrens arbeitet.

Wenn größere Hinterschnitt-Winkel erforderlich sind, muß entweder die Taumelmaschine entsprechend neu konstruiert werden, oder aber die Flanken 30 und 31 der Zahnausnehmungen 18 an dem Verformwerkzeug 16 werden ihrerseits mit einem entsprechenden Hinterschnitt versehen. In diesem Fall addieren sich der maximale Taumelwinkel und der Hinterschnitt-Winkel der Flanken 30, 31 der Zahnausnehmungen 18 zu dem erreichbaren Hinterschnitt-Winkel an den Schaltzähnen 5. So kann man beispielsweise die Zahnausnehmungen 18 mit einem Hinterschnitt-Winkel von 2,3° versehen, um zusammen mit einem maximalen Taumelwinkel von 2° den Hinterschnitt-Winkel von 4,3° an den Schaltzähnen 5 zu realisieren.

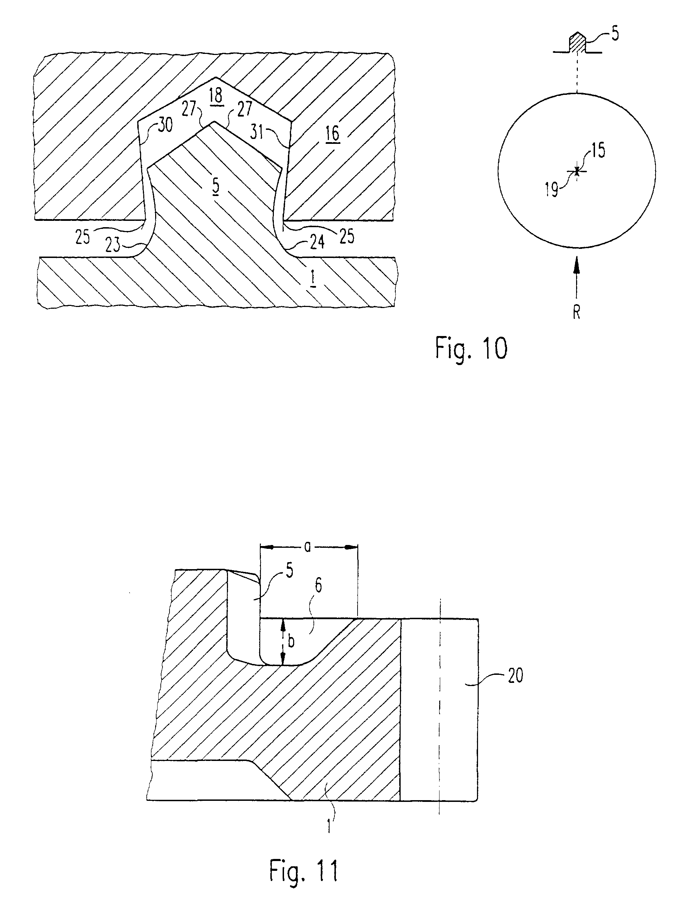

Figur 10 zeigt eine Zahnausnehmung 18 mit Hinterschnitt. Ansonsten entspricht die Figur 10 der Figur 9.

Figur 11 zeigt einen Teilschnitt durch einen Teil eines fertiggestellten Schaltzahnrades 1 in vergrößerter Darstellung. Hier ist insbesondere erkennbar, daß die Schaltzähne 5 in der Nut 6 teilweise versenkt sind, wodurch das Schaltzahnrad 1 insgesamt relativ flach ausgebildet werden kann. Bei den herkömmlichen Verfahren kann ein bestimmtes Verhältnis der Nutenbreite a zur Nutentiefe b nicht unterschritten werden. Bei dem erfindungsgemäßen Verfahren ist dieses Verhältnis günstiger im Hinblick auf das angestrebte Ziel, die Schaltzahnräder der hier betrachteten Art möglichst flach zu gestalten.

Abschließend soll bemerkt werden, daß insbesondere die Figuren 3-10 hinsichtlich der wesentlichen Merkmale wie Taumelwinkel und Hinterschneidung stark übertrieben dargestellt worden sind. Bei maßstabsgetreuer Darstellung wären diese Merkmale kaum erkennbar.

Zu bemerken ist ferner, daß die Angaben des maximalen Taumelwinkels sowie die Zahl der Taumel-Umrehungen nur beispielhaft sind und geändert werden können, ohne daß die Erfindung dadurch in ihrer wesentlichen Substanz berührt wird.

Es wird außerdem noch darauf hingewiesen. daß das oben beschriebene Verfahren, das Untergesenk 21 und das Verformwerkzeug 16 gleichermaßen in verschiedenen Typen von Taumelpressen eingesetzt werden können. Die gebräuchlichsten Taumeipressen lassen sich beispielsweise nach ihren Werkzeugbewegungen in drei Typen klassifizieren.

Bei der Taumelpresse vom Typ 1 führt das Untergesenk 21 mit der darin eingelegten Schaltzahnrad-Vorform 1 eine angetriebene Rotationsbewegung um die Drehachse 15 aus. Das obere Verformwerkzeug 16 dreht sich synchron zur Rotationsbewegung des Untergesenks 21 um die um den Taumelwinkel τ geneigte Taumelachse 19 mit. Die Translationsbewegung, die der Hubbewegung während des Umformvorganges entspricht, wird ebenfalls durch das obere Verformwerkzeug 16 hydraulisch eingeleitet. Ist die Rotationsbewegung des Verformwerkzeuges 16 nicht angetrieben, d.h. dreht sich das Verformwerkzeug 16 frei um die Taumelachse 19 mit dem Schaltzahnrad 1 mit, so spricht man von der Taumelpresse Typ 1A. Wird hingegen die Rotationsbewegung des Verformwerkzeuges 16 zusätzlich angetrieben, so wird diese Taumelpresse Typ 1B genannt.

Die Taumelpresse vom Typ 2 besitzt ein festes Untergesenk 21, das weder Translationsnoch Rotationsbewegungen ausführen kann. Das Schaltzahnrad 1 ist während des gesamten Bearbeitungsvorganges stationär. Das obere Verformwerkzeug 16 führt dafür insgesamt drei Bewegungen aus, die Rotation um die Taumelachse 19, die Taumelbewegung um die vertikale Drehachse 15, sowie die hydraulisch angetriebene Hubbewegung in axialer Richtung.

Typ 3 Taumelpressen, für die auch das Verfahren oben anhand der Figuren beschrieben wurde, stellen dagegen die gängigste Art von Taumelpressen dar. Hier erfolgt die hydraulisch angetriebene Hubbewegung durch einen Zylinder im unteren Teil der Maschine. Die Taumelbewegung wird durch das obere Verformwerkzeug 16 eingeleitet, Untergesenk 21 und Schaltzahnrad 1 bleiben stationär.

Unabhängig vom Typ der verwendeten Taumelpresse kommt es für das erfindungsgemäße nur darauf an, daß das Verformwerkzeug 16 relativ zu dem Schaltzahnrad bzw. der Schaltzahnrad-Vorform 1 eine taumelnde Kreisbewegung durchführt. Wie die einzelnen Bewegungskomponenten der Taumelbewegung auf die verschiedenen Werkzeugteile der jeweils verwendeten Taumelpresse aufgeteilt werden, ist dabei grundsätzlich unerheblich.

## Patentansprüche

1. Verfahren zum Herstellen eines Schaltzahnrades mit koaxial angeordneten und axial vorstehenden Schaltzähnen, die einen axialen Hinterschnitt haben,
**gekennzeichnet durch** folgende Schritte:
a) eine Schaltzahnrad-Vorform (1) mit koaxial angeordneten und axial vorstehenden vorgeformten Schaltzähnen (5), deren Flanken (23, 24) sich in axialer Richtung erstrecken, wird mit einem entsprechende axiale Zahnausnehmungen (18) aufweisenden Verformwerkzeug (16) in Eingriff gebracht, wobei die vorgeformten Schaltzähne (5) der Schaltzahnrad-Vorform (1) mit Spiel in die Zahnausnehmungen (18) eintauchen,
b) die Schaltzahnrad-Vorform (1) und das Verformwerkzeug (16) werden relativ zueinander in eine taumelnde Kreisbewegung versetzt, derart, daß sich die Konturen (25, 26) der Zahnausnehmungen (18) unter Bildung des angestrebten Hinterschnittes pressend und materialumformend über die Flanken (23, 24) der vorgeformten Schaltzähne (5) der Schaltzahnrad-Vorform (1) bewegen,
c) die so bearbeitete Schaltzahnrad-Vorform (1) und das Verformwerkzeug (16) werden wieder voneinander getrennt.

2. Verfahren nach Anspruch 1,
**dadurch gekennzeichnet,**
**daß** bei Schritt a) die Schaltzahnrad-Vorform (1) und das Verformwerkzeug (16) koaxial zueinander ausgerichtet sind.

3. Verfahren nach einem der Ansprüche 1 oder 2,
**dadurch gekennzeichnet,**
**daß** bei Schritt c) die Schaitzahnrad-Vorform (1) und das Verformwerkzeug (16) ebenfalls koaxial zueinander ausgerichtet sind.

4. Verfahren nach einem der Ansprüche 1 bis 3,
**dadurch gekennzeichnet,**
**daß** in Schritt b) die Schaltzahnrad-Vorform (1) in eine angetriebene Rotationsbewegung um eine Drehachse (15) versetzt wird und das Verformwerkzeug (16) sich synchron zur Rotationsbewegung der Schaltzahnrad-Vorform (1) um eine um einen Taumelwinkel (τ) geneigte Taumelachse (19) mitdreht.

5. Verfahren nach Anspruch 4,
**dadurch gekennzeichnet,**
**daß** die Rotationsbewegung des Verformwerkzeuges (16) zusätzlich angetrieben ist.

6. Verfahren nach einem der Ansprüche 1 bis 3,
**dadurch gekennzeichnet,**
**daß** in Schritt b) die Schaltzahnrad-Vorform (1) stationär ist und das Verformwerkzeug (16) gleichzeitig eine Rotation um eine Taumelachse (19), eine Taumelbewegung um eine vertikale Drehachse (15) und eine Hubbewegung in axialer Richtung ausführt.

7. Verfahren nach einem der Ansprüche 1 bis 3,
**dadurch gekennzeichnet,**
**daß** in Schritt b) die Schaltzahnrad-Vorform (1) eine Hubbewegung in axialer Richtung und das Verformwerkzeug (16) gleichzeitig eine Taumelbewegung ausführt.

8. Verfahren nach einem der vorherstehenden Ansprüche,
**dadurch gekennzeichnet,**
**daß** bei Schritt b) der Taumelwinkel (τ) zwischen der Schaltzahnrad-Vorform (1) und dem Verformwerkzeug (16) während der taumelnden Kreisbewegung sukzessive von 0° auf einen maximalen Taumelwinkel vergrößert, dann bei dem maximalen Taumelwinkel gehalten und schließlich wieder auf 0° reduziert wird.

9. Verfahren nach einem der vorherstehenden Ansprüche,
**dadurch gekennzeichnet,**
**daß** Schritt b) zunächst in der einen taumelnden Bewegungsrichtung durchgeführt und dann in der entgegengesetzten taumelnden Bewegungsrichtung wiederholt wird.

10. Vorrichtung zur Durchführung des Verfahrens nach einem der Ansprüche 1-9,
**gekennzeichnet durch**
ein Aufnahmeteil (21) für eine Schaltzahnrad-Vorform (1) mit einem Ring von vorgeformten, sich in axialer Richtung erstreckenden Schaltzähnen (5), ein Verformwerkzeug (16) mit einer kreisförmigen Einsenkung (17) an deren Rand sich Zahnausnehmungen (18) befinden, die sowohl axial zur Stirnseite des Verformwerkzeuges (16) hin wie auch radial nach innen hin offen sind, und einen Antrieb, mittels welchem das Aufnahmeteil (21) und das Verformwerkzeug (16) mit verstellbarem Taumelwinkel (τ) relativ zueinander in eine taumelnde Kreisbewegung versetzt werden können.

11. Vorrichtung nach Anspruch 10,
**dadurch gekennzeichnet,**
**daß** sich die Flanken (30, 31) der Zahnausnehmungen (18) an dem Verformwerkzeug (16) in axialer Richtung erstrecken oder - von der Stirnseite des Verformwerkzeuges (16) aus gesehen - einen axialen Hinterschnitt haben.

12. Schaltzahnrad mit einem Kranz sich axial erstreckender Schaltzähne (5) welches nach dem Verfahren gemäß einem der Ansprüche 1-9 hergestellt worden ist,
**dadurch gekennzeichnet,**
**daß** die Zahnflanken (23, 24) unter Bildung eines Hinterschnitts konkav geformt sind, derart, daß der axial vorstehende Kopf der Schaltzähne (5) weiter als der mittlere Bereich ist.

## Claims

1. A process for manufacturing a ratchet wheel having coaxially arranged and axially protruding ratchet teeth which have an axial undercut,
**characterised by** the steps below:
a) a ratchet wheel preform (1), having coaxially arranged and axially protruding preformed ratchet teeth (5) whereof the flanks (23, 24) extend in the axial direction, is brought into engagement with a form tool (16) having corresponding axial tooth recesses (18), the preformed ratchet teeth (5) of the ratchet wheel preform (1) dipping with play into the tooth recesses (18),
b) the ratchet wheel preform (1) and the form tool (16) are set in wobbling circular motion relative to one another, such that the contours (25, 26) of the tooth recesses (18) move in pressing and material-shaping manner over the flanks (23, 24) of the preformed ratchet teeth (5) of the ratchet wheel preform (1), forming the desired undercut,
c) the thus-processed ratchet wheel preform (1) and the form tool (16) are separated from one another again.

2. A process according to Claim 1,
**characterised in that**
in step a) the ratchet wheel preform (1) and the form tool (16) are aligned coaxially with respect to one another.

3. A process according to one of Claims 1 or 2,
**characterised in that**
in step c) the ratchet wheel preform (1) and the form tool (16) are likewise aligned coaxially with respect to one another.

4. A process according to one of Claims 1 to 3,
**characterised in that**
in step b) the ratchet wheel preform (1) is set in driven rotary motion about an axis of rotation (15) and the form tool (16) rotates synchronously with the rotary motion of the ratchet wheel preform (1) about a wobble axis (19) inclined through a wobble angle (τ).

5. A process according to Claim 4,
**characterised in that** the rotary motion of the form tool (16) is additionally driven.

6. A process according to one of Claims 1 to 3,
**characterised in that**
in step b) the ratchet wheel preform (1) is stationary and the form tool (16) simultaneously executes a rotation about a wobble axis (19), a wobble motion about a vertical axis of rotation (15) and a lifting motion inthe axial direction.

7. A process according to one of Claims 1 to 3,
**characterised in that**
in step b) the ratchet wheel preform (1) executes a lifting motion in the axial direction and the form tool (16) simultaneously executes a wobble motion.

8. A process according to one of the preceding claims,
**characterised in that**
in step b) the wobble angle (τ) between the ratchet wheel preform (1) and the form tool (16) increases successively from 0° to a maximum wobble angle during the wobbling circular motion, is then held at the maximum wobble angle and finally reduced to 0° again.

9. A process according to one of the preceding claims,
**characterised in that**
step b) is firstly carried out in one wobbling motion direction and then repeated in the opposite wobbling motion direction.

10. A device for carrying out the process according to one of Claims 1 to 9,
**characterised by**
a receiving part (21) for a ratchet wheel preform (1) having a ring of preformed ratchet teeth (5) extending in the axial direction, a form tool (16) having a circular hollow (17), tooth recesses (18) being located on the edge of said hollow and being open both axially towards the end face of the form tool (16) and also radially inwards, and a drive by means of which the receiving part (21) and the form tool (15) can be set in wobbling circular motion relative to one another at an adjustable wobble angle (τ).

11. A device according to Claim 10,
**characterised in that**
the flanks (30, 31) of the tooth recesses (18) in the form tool (16) extend in the axial direction or - as seen from the end face of the form tool (16) - have an axial undercut.

12. A ratchet wheel having a ring of axially extending ratchet teeth (5) which has been manufactured in accordance with the process according to one of Claims 1-9,
**characterised in that**
the tooth flanks (23, 24) have a concave shape forming an undercut, such that the axially protruding head of the ratchet teeth (5) is wider than the central region.

## Revendications

1. Procédé pour la fabrication d'un pignon de changement de vitesses avec des dents disposées coaxialement et faisant saillie axialement qui présentent une contre-dépouille axiale,
**caractérisé par** les étapes suivantes :
a) une préforme de pignon de changement de vitesses (1) avec des dents (5) préformées, disposées coaxialement et faisant saillie axialement, dont les flancs (23,24) s'étendent dans la direction axiale, est mise en contact avec un outil de déformation (16) présentant des évidements de dents (18) axiaux correspondants, les dents préformées (5) de la préforme du pignon de changement de vitesses (1) plongent avec un jeu dans les évidements de dents (18),
b) la préforme de pignon de changement de vitesses (1) et l'outil de déformation (16) sont mis en un mouvement circulaire de nutation entre eux, de telle sorte que les contours (25,26) des évidements de dents (18) sous l'effet de la formation de la contre-dépouille souhaitée se déplacent en comprimant et en déformant le matériau au-dessus des flancs (23,24) des dents préformées (5) de la préforme de pignon de changement de vitesses (1),
c) la préforme de pignon de changement de vitesses (1) ainsi usinée et l'outil de déformation (16) sont à nouveau séparés l'un de l'autre.

2. Procédé selon la revendication 1,
**caractérisé en ce que**,
lors de l'étape a) la préforme du pignon de changement de vitesses (1) et l'outil de déformation (16) sont alignés coaxialement l'un sur l'autre.

3. Procédé selon l'une des revendications 1 ou 2,
**caractérisé en ce que**,
lors de l'étape c) la préforme du pignon de changement de vitesses (1) et l'outil de déformation (16) sont également alignés coaxialement l'un sur l'autre.

4. Procédé selon l'une des revendications 1 à 3,
**caractérisé en ce que**,
lors de l'étape b) la préforme du pignon de changement de vitesses (1) est mise en mouvement de rotation commandé autour d'un axe de rotation (15) et l'outil de déformation (16) accompagne de façon synchrone le mouvement de rotation de la préforme de pignon de changement de vitesses (1) autour d'un axe de nutation (19) incliné selon un angle de nutation (τ).

5. Procédé selon la revendication 4,
**caractérisé en ce que**,
le mouvement de rotation de l'outil de déformation (16) est de plus commandé.

6. Procédé selon l'une des revendications 1 à 3,
**caractérisé en ce que**,
lors de l'étape b) la préforme de pignon de changement de vitesses (1) est stationnaire et l'outil de déformation (16) effectue simultanément une rotation autour d'un axe de nutation (19), un mouvement de nutation autour d'un axe de rotation verticale (15) et un mouvement de levée dans la direction axiale.

7. Procédé selon l'une des revendications 1 à 3,
**caractérisé en ce que**,
lors de l'étape b) la préforme du pignon de changement de vitesses (1) effectue un mouvement de levée dans la direction axiale et l'outil de déformation (16) effectue simultanément un mouvement de nutation.

8. Procédé selon l'une des revendications précédentes,
**caractérisé en ce que**,
lors de l'étape b) l'angle de nutation (τ) entre la préforme du pignon de changement de vitesses (1) et l'outil de déformation (16) pendant le mouvement circulaire en nutation augmente successivement de 0° jusqu'à un angle de nutation maximum, puis il est maintenu à l'angle de nutation maximum pour être finalement réduit de nouveau à 0°.

9. Procédé selon l'une des revendications précédentes,
**caractérisé en ce que**,
l'étape b) est tout d'abord effectuée dans une direction de mouvement en nutation et ensuite dans la direction de mouvement en nutation opposée.

10. Dispositif pour l'exécution du procédé selon l'une des revendications 1-9,
**caractérisé par**
une partie de support (21) pour une préforme de pignon de changement de vitesses (1) avec un anneau de dents (5) préformées s'étendant en direction axiale, un outil de déformation (16) avec une creusure circulaire (17) sur le bord de laquelle se situent des évidements de dents (18) qui sont ouverts aussi bien axialement vers le côté frontal de l'outil de déformation (16) que radialement vers l'intérieur, et un entraînement, au moyen duquel la partie de support (21) et l'outil de déformation (16) peuvent être mis en mouvement circulaire en nutation avec un angle de nutation réglable (τ) l'un par rapport à l'autre.

11. Dispositif selon la revendication 10,
**caractérisé en ce que**,
les flancs (30,31) des évidements de dents (18) s'étendent dans la direction axiale par rapport à l'outil de déformation (16) ou présentent une contre-dépouille axiale - comme cela est vu à partir du côté frontal de l'outil de déformation (16).

12. Pignon de changement de vitesses avec une couronne de dents (5) s'étendant axiaiement, pignon qui a été fabriqué d'après le procédé selon l'une des revendications 1-9,
**caractérisé en ce que**,
les flancs des dents (23-24) sont conçus en formant une contre-dépouille de telle sorte que la tête faisant saillie aXiaiement des dents (5) se situe au-delà de la zone médiane.
